# EUROPEAN PATENT APPLICATION

(11) **EP 4 722 318 A1**
(43) Date of publication of application: **08.04.2026**
(21) Application number: 24819339.3
(22) Date of filing: 05.06.2024
(51) Int. Cl.: C09K 3/00, B01J 13/18, C08J 3/22, C08J 9/32

(54) **THERMALLY EXPANDABLE MICROCAPSULES**

(30) Priority: 05.06.2023 JP 2023092771
(71) Applicant: Sekisui Chemical Co., Ltd., Osaka-shi, Osaka 530-8565 (JP)
(72) Inventor: OBINATA, Shuhei, Mishima-gun, Osaka 618-0021 (JP); YAMADA, Yasuyuki, Mishima-gun, Osaka 618-0021 (JP)
(74) Representative: Cabinet Beau de Loménie
(86) International application number: PCT/JP2024/020447
(87) International publication number: WO 2024/253111

(57) **Abstract**

The present invention provides a thermally expandable microcapsule that has excellent handleability and enables the production of a foam molded article with good color development, a foamable masterbatch containing the thermally expandable microcapsule, and a foam molded article produced using the thermally expandable microcapsule. Provided is a thermally expandable microcapsule including: a shell containing a polymer compound; and a volatile expansion agent as a core agent encapsulated by the shell, the shell containing a specific-gravity modifier having a density of 2.3 g/cm³ or greater and 22 g/cm³ or less.

## Description

### TECHNICAL FIELD

The present invention relates to a thermally expandable microcapsule that has excellent handleability and enables the production of a foam molded article with good color development, a foamable masterbatch containing the thermally expandable microcapsule, and a foam molded article produced using the thermally expandable microcapsule.

### BACKGROUND ART

Thermally expandable microcapsules are used as design-imparting agents or weight-reducing agents in various applications. They are also used in foamable inks, wallpapers, and other coating materials for weight reduction, as well as adhesives such as debondable adhesives.

A widely known thermally expandable microcapsule is one which has a thermoplastic shell polymer filled with a volatile expansion agent that becomes gaseous at a temperature not higher than the softening point of the shell polymer.

An example of such a thermally expandable microcapsule is disclosed in, for example, Patent Literature 1. Patent Literature 1 discloses a thermally expandable microcapsule filled with a volatile expansion agent. The thermally expandable microcapsule is obtained by mixing a volatile expansion agent (e.g., aliphatic hydrocarbon with a low boiling point) with a monomer to prepare an oily mixture, adding the oily mixture and an oil-soluble polymerization catalyst to an aqueous dispersion medium containing a dispersant while stirring to perform suspension polymerization.

Patent Literature 2 discloses a thermally expandable microsphere containing a polymer made of a crosslinkable monomer, the crosslinkable monomer having (meth)acryloyl groups and a reactive carbon-carbon double bond and having a molecular weight of 500 or greater.

### CITATION LIST

### - Patent Literature

Patent Literature 1: JP S42-26524 B
Patent Literature 2: WO 2019/150951

### SUMMARY OF INVENTION

### - Technical Problem

Unfortunately, the thermally expandable microcapsules (thermal expandable microspheres) disclosed in Patent Literatures 1 and 2 may have poor handleability because the thermally expandable microcapsules when used in foamable ink may float during storage, leading to the need for operations such as a pre-use stirring step or an additional stirring step.

Moreover, foam molded articles obtained using the thermally expandable microcapsules may have poor color development especially when the foam molded articles are black.

The present invention aims to provide a thermally expandable microcapsule that has excellent handleability and enables the production of a foam molded article with good color development, a foamable masterbatch containing the thermally expandable microcapsule, and a foam molded article produced using the thermally expandable microcapsule.

### - Solution to Problem

The disclosure (1) relates to a thermally expandable microcapsule including: a shell containing a polymer compound; and a volatile expansion agent as a core agent encapsulated by the shell, the shell containing a specific-gravity modifier having a density of 2.3 g/cm³ or greater and 22 g/cm³ or less.

The disclosure (2) relates to the thermally expandable microcapsule according to the disclosure (1), wherein the specific-gravity modifier is zirconium nitride.

The disclosure (3) relates to the thermally expandable microcapsule according to the disclosure (1) or (2), wherein the specific-gravity modifier is contained in an amount of 0.01% by weight or more and 30% by weight or less relative to an entirety of the thermally expandable microcapsule.

The disclosure (4) relates to the thermally expandable microcapsule according to any one of the disclosures (1) to (3), wherein the specific-gravity modifier is present in the shell or on a surface of the shell.

The disclosure (5) relates to the thermally expandable microcapsule according to any one of the disclosures (1) to (3), wherein the specific-gravity modifier is present in the shell and on a surface of the shell.

The disclosure (6) relates to the thermally expandable microcapsule according to any one of the disclosures (1) to (5), which has a true density of 1.08 g/cm³ or greater and 1.50 g/cm³ or less.

The disclosure (7) relates to the thermally expandable microcapsule according to any one of the disclosures (1) to (6), which has a lightness (L* value) of 50 or less.

The disclosure (8) relates to a foamable masterbatch containing: the thermally expandable microcapsule according to any one of the disclosures (1) to (7); and a resin.

The disclosure (9) relates to a foam molded article produced using the thermally expandable microcapsule according to any one of the disclosures (1) to (7).

The present invention is described in detail below.

The shell constituting the thermally expandable microcapsule that is an embodiment of the present invention contains a specific-gravity modifier.

The specific-gravity modifier contained in the thermally expandable microcapsule can prevent floating of the thermally expandable microcapsule when it is used in ink or adhesive applications, thereby allowing more uniform distribution of the thermally expandable microcapsules.

The lower limit of the density of the specific-gravity modifier is 2.3 g/cm³, and the upper limit thereof is 22 g/cm³. When the density is within the range, floating of the thermally expandable microcapsule can be prevented, allowing more uniform distribution of the thermally expandable microcapsules.

The lower limit of the density of the specific-gravity modifier is preferably 3.0 g/cm³, the upper limit thereof is preferably 15.0 g/cm³. The lower limit is more preferably 4.0 g/cm³, and the upper limit is more preferably 8.0 g/cm³.

The density of the specific-gravity modifier can be measured using a true density meter.

The specific-gravity modifier may be in a sphere form, a fiber form, a flat plate form, or a polygonal form, for example.

The specific-gravity modifier preferably has a specific surface area of 5 m²/g or greater and 300 m²/g or less.

The specific surface area can be measured by determining the nitrogen adsorption isotherm using a surface area/pore size analyzer (NOVA4200e, available from Quantachrome Instruments) and calculating the specific surface area of the specific-density modifier in accordance with the BET method based on the measurement results.

Examples of the specific-gravity modifier include an elemental metal and a nitride, a carbide, an oxide, and an oxynitride of a metal. The metal is preferably at least one selected from the group consisting of zirconium, iron, copper, cobalt, nickel, manganese, titanium, and tin.

Specific examples of the specific-gravity modifier include zirconium nitride, boron carbide, boron carbon nitride, alumina, magnesium hydroxide, magnesium oxide, zinc oxide, iron oxide, ferrite, mullite, cordierite, silicon nitride, silicon carbide, titanium black, titanium oxide, barium titanate, tin oxide, zirconium oxide, magnesium fluoride, aluminum nitride, magnesium carbonate, aluminum hydroxide, and iron-manganese-copper oxide.

In particular, zirconium nitride is more preferred because it has excellent dispersibility in resin, can impart black color, and can achieve high density in a small addition amount.

The specific-gravity modifier is preferably colored, particularly preferably black.

The specific-gravity modifier is particularly preferably in a fine particle form.

The lower limit of the average primary particle size of the specific-gravity modifier is preferably 1 nm, and the upper limit thereof is preferably 5,000 nm. The lower limit is more preferably 5 nm, and the upper limit is more preferably 1,000 nm. The lower limit is still more preferably 7 nm, and the upper limit is still more preferably 150 nm. When the primary particle size is in the range, the specific-gravity modifier is easily dispersed.

The average primary particle size can be measured by preparing a thin film passing through or near the centers of thermally expandable microcapsules dispersed in an embedding resin, and then observing the microcapsules with a transmission electron microscope, for example.

The lower limit of the amount of the specific-gravity modifier relative to the entirety of the thermally expandable microcapsule is preferably 0.01% by weight, and the upper limit thereof is preferably 30% by weight. When the amount is 0.01% by weight or more, floating of the thermally expandable microcapsule can be reduced. When the amount is 30% by weight or less, the foamability can be increased. The lower limit is more preferably 0.3% by weight, and the upper limit is more preferably 15% by weight, still more preferably 12% by weight, further more preferably 10% by weight.

The amount of the specific-gravity modifier can be determined, for example, from the weight of residue at 1,000°C when the thermally expandable microcapsule is heated in the air to 1,000°C at 10°C/min and maintained at 1,000°C for 10 minutes.

Specifically, assuming that the weight of residue when the thermally expandable microcapsule containing the specific-gravity modifier is heated to 1,000°C is A%, and that the weight of residue after a thermally expandable microcapsule containing no specific-gravity modifier is heated to 1,000°C is B%, the amount of the specific-gravity modifier is calculated as (A - B)%.

The shell constituting the thermally expandable microcapsule that is an embodiment of the present invention contains a polymer compound.

The polymer compound is preferably a polymer of a monomer composition containing a nitrile monomer and a carboxy group-containing monomer.

Examples of the nitrile monomer include, but are not limited to, acrylonitrile, methacrylonitrile, α-chloroacrylonitrile, α-ethoxyacrylonitrile, fumaronitrile, and mixtures thereof. Particularly preferred among these are acrylonitrile and methacrylonitrile. Each of these may be used alone, or two or more of them may be used in combination.

The lower limit of the amount of the nitrile monomer in the monomer composition is preferably 40% by weight, and the upper limit thereof is preferably 90% by weight. When the amount is 40% by weight or more, the shell can have increased gas barrier properties to improve the expansion ratio. When the amount is 90% by weight or less, heat resistance can be improved, and yellowing can be prevented. The lower limit is more preferably 50% by weight, and the upper limit is more preferably 80% by weight.

The carboxy group-containing monomer may be, for example, a C3-C8 radically polymerizable unsaturated carboxylic acid monomer having a carboxy group.

Specific examples thereof include: unsaturated dicarboxylic acids and anhydrides thereof; and unsaturated dicarboxylic acid monoesters and derivatives thereof. Each of these may be used alone, or two or more of them may be used in combination.

Examples of the unsaturated dicarboxylic acids include unsaturated monocarboxylic acids such as acrylic acid, methacrylic acid, ethacrylic acid, crotonic acid, and cinnamic acid, maleic acid, itaconic acid, fumaric acid, citraconic acid, and chloromaleic acid.

Examples of the unsaturated dicarboxylic acid monoesters include monomethyl maleate, monoethyl maleate, monobutyl maleate, monomethyl fumarate, monoethyl fumarate, monomethyl itaconate, monoethyl itaconate, and monobutyl itaconate.

Particularly preferred among these are acrylic acid, methacrylic acid, maleic acid, maleic anhydride, and itaconic acid.

The lower limit of the amount of the carboxy group-containing monomer in the monomer composition is preferably 5% by weight, and the upper limit thereof is preferably 50% by weight. When the amount is 5% by weight or more, the maximum foaming temperature can be increased. When the amount is 50% by weight or less, the expansion ratio can be improved. The lower limit is more preferably 10% by weight, and the upper limit is more preferably 30% by weight.

The monomer composition preferably contains a crosslinkable monomer having two or more double bonds in the molecule. The crosslinkable monomer serves as a crosslinking agent. When the monomer composition contains the crosslinkable monomer, shell strength can be enhanced, so that the cell wall is less likely to break in thermal expansion.

Examples of the crosslinkable monomer include monomers having two or more radically polymerizable double bonds. Specific examples thereof include divinyl benzene, di(meth)acrylates, and tri- or higher functional (meth)acrylates.

Examples of di(meth)acrylates include ethylene glycol di(meth)acrylate, diethylene glycol di(meth)acrylate, triethylene glycol di(meth)acrylate, propylene glycol di(meth)acrylate, and 1,4-butanediol di(meth)acrylate. Examples also include 1,6-hexanediol di(meth)acrylate, 1,9-nonanediol di(meth)acrylate, glycerol di(meth)acrylate, trimethylolpropane di(meth)acrylate, and dimethylol-tricyclodecane di(meth)acrylate. Di(meth)acrylate of polyethylene glycol having a weight average molecular weight of 200 to 600 may also be used.

Examples of trifunctional (meth)acrylates include trimethylolpropane tri(meth)acrylate, ethylene oxide-modified trimethylolpropane tri(meth)acrylate, pentaerythritol tri(meth)acrylate, and triallylformal tri(meth)acrylate. Examples of tetra- or higher functional (meth)acrylates include pentaerythritol tetra(meth)acrylate and dipentaerythritol hexa(meth)acrylate.
Of these, trifunctional (meth)acrylates such as trimethylolpropane tri(meth)acrylate and bifunctional (meth)acrylates such as polyethylene glycol provide relatively uniform crosslinking in a shell mainly containing acrylonitrile.

The lower limit of the amount of the crosslinkable monomer in the monomer composition is preferably 0.1% by weight, and the upper limit thereof is preferably 1.0% by weight. When the amount of the crosslinkable monomer is 0.1% by weight or more, the crosslinkable monomer can sufficiently exhibit the effect as a crosslinking agent. When the amount of the crosslinkable monomer is 1.0% by weight or less, the expansion ratio of the thermally expandable microcapsule can be improved. The lower limit of the amount of the crosslinkable monomer is more preferably 0.15% by weight, and the upper limit thereof is more preferably 0.9% by weight.

The monomer composition preferably contains a different monomer in addition to the nitrile monomer, the carboxy group-containing monomer , and the crosslinkable monomer. When the monomer composition contains the different monomer, the thermally expandable microcapsule has good compatibility with a matrix resin such as a thermoplastic resin, so that a foam molded article produced using the thermally expandable microcapsule can have excellent appearance.

Examples of the different monomer include (meth)acrylates and also include vinyl monomers such as vinyl chloride, vinylidene chloride, vinyl acetate, and styrene. Each of these may be used alone, or two or more of them may be used in combination. Preferred among these are (meth)acrylates. Particularly preferred are alkyl methacrylates such as methyl methacrylate, ethyl methacrylate, and n-butyl methacrylate and alicyclic/aromatic ring-containing/heterocycle-containing methacrylates such as cyclohexyl methacrylate, benzyl methacrylate, and isobornyl acrylate.

The lower limit of the amount of the different monomer in the monomer composition is preferably 0.1% by weight, and the upper limit thereof is preferably 45% by weight. When the amount of the different monomer is 0.1% by weight or more, a composition containing the thermally expandable microcapsule can have improved dispersibility. When the amount of the different monomer is 45% by weight or less, the cell wall can have improved gas barrier properties, leading to better thermal expandability. The lower limit of the amount of the different monomer is more preferably 0.3% by weight, and the upper limit thereof is more preferably 40% by weight.

A polymerization initiator is added to the monomer composition to polymerize the monomers.

Examples of suitable polymerization initiators include dialkyl peroxides, diacyl peroxides, peroxy esters, peroxydicarbonates, and azo compounds.

Specific examples include: dialkyl peroxides such as methyl ethyl peroxide, di-t-butyl peroxide, and dicumyl peroxide; and diacyl peroxides such as isobutyl peroxide, benzoyl peroxide, 2,4-dichlorobenzoyl peroxide, and 3,5,5-trimethylhexanoyl peroxide. Examples also include t-butyl peroxypivalate, t-hexyl peroxypivalate, t-butyl peroxyneodecanoate, t-hexyl peroxyneodecanoate, 1-cyclohexyl-1-methylethyl peroxyneodecanoate, and 1,1,3,3-tetramethylbutyl peroxyneodecanoate.

Examples also include: peroxy esters such as cumyl peroxyneodecanoate and (α,α-bis-neodecanoylperoxy)diisopropylbenzene; bis(4-t-butylcyclohexyl)peroxydicarbonate; di-n-propyl-oxydicarbonate; and diisopropyl peroxydicarbonate.

Examples also include peroxydicarbonates such as di(2-ethylethylperoxy)dicarbonate, dimethoxybutyl peroxydicarbonate, and di(3-methyl-3-methoxybutylperoxy)dicarbonate.

Examples also include azo compounds such as 2,2'-azobisisobutyronitrile, 2,2'-azobis(4-methoxy-2,4-dimethylvaleronitrile, 2,2'-azobis(2,4-dimethylvaleronitrile), and 1,1'-azobis(1-cyclohexanecarbonitrile).

The lower limit of the weight average molecular weight of the polymer compound constituting the shell is preferably 100,000 and the upper limit thereof is preferably 2,000,000. When the weight average molecular weight is less than 100,000, the shell may have decreased strength. When the weight average molecular weight is more than 2,000,000, the shell may have too high strength, which may decrease the expansion ratio.

The shell constituting the thermally expandable microcapsule that is an embodiment of the present invention preferably further contains at least one inorganic compound selected from the group consisting of a Si compound and a Mg compound.

The inorganic compound contained in the shell can reduce fusion of the thermally expandable microcapsules in resin during molding.

The inorganic compound is different from the specific-gravity modifier.

The Si compound and Mg compound preferably contain an oxide, hydroxide, carbonate, or hydrogencarbonate of silicon or magnesium.

Each of these Si compounds and Mg compounds may be used alone, or two or more of them may be used in combination.

Examples of the Si compound include colloidal silica, silica sol, sodium silicate solution No. 3, sodium orthosilicate, and sodium metasilicate. Preferred among these is colloidal silica.

Examples of the Mg compound include magnesium oxide, magnesium hydroxide, magnesium hydroxide oxide, hydrotalcite, dihydrotalcite, magnesium carbonate, basic magnesium carbonate, calcium magnesium carbonate, magnesium phosphate, magnesium hydrogen phosphate, magnesium pyrophosphate, and magnesium borate. Preferred among these is magnesium hydroxide.

Examples of other inorganic compounds that may be added include calcium phosphate, aluminum hydroxide, ferric hydroxide, barium sulfate, calcium sulfate, sodium sulfate, calcium oxalate, calcium carbonate, and barium carbonate. If necessary, an inorganic salt (e.g., sodium chloride or sodium sulfate), an alkali metal nitrite, stannous chloride, stannic chloride, potassium bichromate, and/or the like may be added.

The inorganic compound is preferably in the form of fine particles.

The inorganic compound in the form of fine particles preferably has a primary particle size (average primary particle size) of 0.5 µm or less, more preferably 5 to 100 nm (0.1 µm). A primary particle size within the above range can lead to less fusion of the thermally expandable microcapsules in resin during molding. The primary particle size can be measured by observation using a scanning electron microscope (Regulus8220, available from Hitachi High-Technologies Corporation).

The inorganic compound preferably has a density of 1.0 g/cm³ or greater and 5.0 g/cm³ or less.

The density of the inorganic compound can be measured using the same method as that used for the density of the specific-gravity modifier.

The lower limit of the amount of the inorganic compound relative to the entirety of the thermally expandable microcapsule is preferably 0.01% by weight, and the upper limit thereof is preferably 7% by weight. When the amount of the inorganic compound is 0.01% by weight or more, fusion of the thermally expandable microcapsules in resin during molding can be reduced. When the amount of the inorganic compound is 7% by weight or less, the dispersibility in resin during molding can be even further enhanced. The lower limit is more preferably 0.3% by weight, and the upper limit is more preferably 5% by weight.

The amount of the inorganic compound can be calculated from the weights of the monomer composition, volatile expansion agent, and specific-gravity modifier that form the thermally expandable microcapsule.

The weight ratio of the inorganic compound to the specific-gravity modifier (inorganic compound/specific-gravity modifier) is preferably 0.001 to 400. When the ratio is 0.001 or greater, fusion of the thermally expandable microcapsules in resin during molding can be reduced. When the ratio is 400 or less, the dispersibility in resin during molding can be even further enhanced. The lower limit is more preferably 0.3, still more preferably 0.5, and the upper limit is more preferably 300, still more preferably 200.

In the present invention, the specific-gravity modifier and the inorganic compound may be present in the shell of the thermally expandable microcapsule or on a surface of the shell, or may be present in the shell and on the surface of the shell. In a suitable embodiment of the present invention, the specific-gravity modifier is preferably contained in the shell.

The position of the specific-gravity modifier and the inorganic compound can be determined by preparing a thin film passing through or near the centers of thermally expandable microcapsules dispersed in an embedding resin, and then observing the microcapsules with a transmission electron microscope, for example.

The shell may contain a metal cation. In the case where the copolymer constituting the shell contains carboxy groups, the metal cation contained in the shell reacts with the carboxy groups, causing ionic crosslinking of the copolymer. This improves heat resistance, resulting in a thermally expandable microcapsule that neither breaks nor contracts for a long time in a high-temperature range. In addition, such a thermally expandable microcapsule is less likely to show a decrease in the elastic modulus of the shell even in a high-temperature range, and thus neither breaks nor contracts even during molding processing involving application of strong shear forces, such as knead molding, calendering, extrusion molding, or injection molding.

The ionic crosslinking mentioned above means formation of crosslinks between the free carboxy groups that are present as side chains of the copolymer. Here, the number of carboxy groups coordinated per valence of the metal cation depends on the type of the metal.

The metal cation may be any metal cation that reacts with the carboxy groups of the copolymer to ionically crosslink the copolymer. Examples include Li, Na, K, Zn, Mg, Ca, Ba, Sr, Mn, Al, Ti, Ru, Fe, Ni, Cu, Cs, Sn, Cr, and Pb ions. Each of these may be used alone, or two or more of them may be used in combination. Preferred among these are Ca, Zn, and Al ions. A Zn ion is particularly suitable.

Any combination of two or more of the metal cations may be used. Preferred is a combination of an ion of an alkali metal and a metal cation other than the alkali metal. The ion of the alkali metal activates functional groups such as carboxy groups, and thus can promote reaction of the metal cation other than the alkali metal with the carboxy groups of the copolymer.

Examples of the alkali metal include Na, K, and Li.

The shell may further contain a stabilizer, an ultraviolet absorber, an antioxidant, an antistatic agent, a flame retardant, a silane coupling agent, a coloring agent, and/or the like, if necessary.

The thermally expandable microcapsule that is an embodiment of the present invention includes a volatile expansion agent as a core agent encapsulated by the shell.

The volatile expansion agent is a substance that becomes gaseous at or below the softening point of the polymer constituting the shell. The volatile expansion agent is preferably a low-boiling-point organic solvent.

Examples of the volatile expansion agent include low-molecular-weight hydrocarbons such as ethane, ethylene, propane, propene, n-butane, isobutane, butene, isobutene, n-pentane, isopentane, neopentane, n-hexane, heptane, petroleum ether, isooctane, octane, decane, isododecane, dodecane, and hexanedecane.

Examples also include chlorofluorocarbons such as CCl₃F, CCl₂F₂, CClF₃, and CClF₂-CClF₂; and tetraalkylsilanes such as tetramethylsilane, trimethylethylsilane, trimethylisopropylsilane, and trimethyl-n-propylsilane. Preferred among these are isobutane, n-butane, n-pentane, isopentane, n-hexane, isooctane, isododecane, and mixtures thereof. Each of these volatile expansion agents may be used alone, or two or more of them may be used in combination.

The volatile expansion agent may be a thermally decomposable compound that is thermally decomposed and becomes gaseous when heated.

In the thermally expandable microcapsule that is an embodiment of the present invention, among the volatile expansion agents described above, a low-boiling-point hydrocarbon with a carbon number of 5 or less is preferably used. The use of such a hydrocarbon allows the resulting thermally expandable microcapsule to have high expansion ratio and quickly start foaming.

The volatile expansion agent may be a thermally decomposable compound that is thermally decomposed and becomes gaseous when heated.

The lower limit of the true density of the thermally expandable microcapsule of the present invention is preferably 1.08 g/cm³ or greater, and the upper limit thereof is preferably 1.50 g/cm³. When the true density is in the range, the thermally expandable microcapsules can be more uniformly distributed. The lower limit is more preferably 1.10 g/cm³, and the upper limit is preferably 1.40 g/cm³.

The true density can be measured using a true density meter (e.g., Ultrapyc 5000, available from Anton Parr) at a pressure of 12 psi and a temperature of 25°C with helium gas.

The lower limit of the lightness (L* value) of the thermally expandable microcapsule of the present invention is preferably 1, and the upper limit thereof is preferably 50. When the lightness (L* value) is in the range, a foam molded article with good color development can be obtained.

The lower limit of the L* value is more preferably 5, and the upper limit thereof is more preferably 40.

The lightness (L* value) herein is an index of the brightness of a color tone. A higher L* value indicates a brighter color tone, while a lower L* value indicates a darker color tone.

The L* value can be measured in accordance with JIS Z 8722:2009 using a spectrophotometer.

The lower limit of the maximum foaming temperature (Tmax) of the thermally expandable microcapsule that is an embodiment of the present invention is preferably 170°C. When the maximum foaming temperature (Tmax) is 170°C or higher, the thermally expandable microcapsule has high heat resistance, so that breaking or contracting of the thermally expandable microcapsule can be prevented in application of a composition containing the thermally expandable microcapsule in a high-temperature range. In addition, aggregation of the thermally expandable microcapsules in application can be reduced, leading to good appearance. The lower limit is more preferably 175°C, and the upper limit is more preferably 240°C.

The maximum foaming temperature herein means a temperature at which the thermally expandable microcapsule reaches its maximum diameter (maximum displacement) when the diameter is measured while the thermally expandable microcapsule is heated from room temperature.

The lower limit of the maximum displacement (Dmax) of the thermally expandable microcapsule that is an embodiment of the present invention as measured by thermomechanical analysis is preferably 10 µm. When the maximum displacement (Dmax) is less than 10 µm, the thermally expandable microcapsule may have a decreased expansion ratio, failing to provide a desired foamability. The lower limit of the maximum displacement is more preferably 20 µm, still more preferably 100 µm, further more preferably 300 µm. The upper limit of the maximum displacement is preferably 2,000 µm, more preferably 1,800 µm, still more preferably 1,500 µm.

The maximum displacement herein means the value of displacement at which a predetermined amount of thermally expandable microcapsules as a whole reaches the maximum diameter when the diameter of the predetermined amount of thermally expandable microcapsules is measured while the microcapsules are heated from room temperature.

The upper limit of the foaming starting temperature (Ts) is preferably 185°C. When the foaming starting temperature (Ts) is 185°C or lower, foaming is easy, so that a desired expansion ratio can be achieved. The lower limit is preferably 130°C, and the upper limit is more preferably 180°C.

The lower limit of the volume average particle size of the thermally expandable microcapsule that is an embodiment of the present invention is preferably 5 µm, and the upper limit is preferably 45 µm. When the volume average particle size is less than 5 µm, the resulting molded article has too small cells, which may result in an insufficient expansion ratio. When the volume average particle size is greater than 45 µm, the resulting molded article has too large cells, which may pose an appearance issue. The lower limit is more preferably 7 µm, and the upper limit is more preferably 35 µm.

The volume average particle size of the thermally expandable microcapsule can be measured using a laser diffraction/scattering particle size distribution analyzer, for example.

The thermally expandable microcapsule that is an embodiment of the present invention may be produced using any method. For example, it can be produced by performing the steps of preparing an aqueous dispersion medium containing the specific-gravity modifier and the inorganic compound, dispersing, in the aqueous dispersion medium, an oily mixture containing the monomer composition and the volatile expansion agent, and polymerizing the monomers.

The monomer composition may contain the nitrile monomer, carboxy group-containing monomer, crosslinkable monomer, and/or different monomer described above.

In the production of the thermally expandable microcapsule that is an embodiment of the present invention, first, the step of preparing an aqueous dispersion medium is performed. Specifically, for example, water, the specific-gravity modifier, the inorganic compound, and optionally an auxiliary stabilizer are added to a polymerization reaction vessel to provide an aqueous dispersion medium containing the specific-gravity modifier and the inorganic compound.

Examples of the auxiliary stabilizer include condensates of diethanolamine and aliphatic dicarboxylic acids and condensates of urea and formaldehyde. Examples also include polyvinylpyrrolidone, polyethylene oxide, polyethyleneimine, tetramethylammonium hydroxide, gelatin, methylcellulose, polyvinyl alcohol, dioctyl sulfosuccinate, sorbitan esters, and emulsifiers.

In addition to the auxiliary stabilizer, a condensate and/or a water-soluble nitrogen compound may be added.

The condensate is preferably a condensate of diethanolamine and an aliphatic dicarboxylic acid, particularly preferably a condensate of diethanolamine and adipic acid or a condensate of diethanolamine and itaconic acid.

Examples of the water-soluble nitrogen compound include polyvinylpyrrolidone, polyethyleneimine, polyoxyethylenealkylamines, and polydialkylaminoalkyl (meth)acrylates typified by polydimethylaminoethyl methacrylate and polydimethylaminoethyl acrylate. Examples also include polydialkylaminoalkyl(meth)acrylamides typified by polydimethylaminopropylacrylamide and polydimethylaminopropylmethacrylamide, polyacrylamide, polycationic acrylamide, polyamine sulfone, and polyallylamine. Preferred among them is polyvinylpyrrolidone.

The aqueous dispersion medium containing the specific-gravity modifier, the inorganic compound, the auxiliary stabilizer, and optionally a dispersant is prepared by adding the components to deionized water. At this time, the pH of the aqueous phase is appropriately determined depending on the types of the specific-gravity modifier, the inorganic compound, and the auxiliary stabilizer. For example, in the case that the inorganic compound is colloidal silica or any other Si compound, an acidic aqueous dispersion medium is used for the polymerization. The aqueous dispersion medium is made acidic by adding an acid (e.g., hydrochloric acid) as necessary to adjust the system to a pH of 3 to 4. In the case that the inorganic compound is a Mg compound (e.g., magnesium hydroxide) or calcium phosphate, an alkaline aqueous dispersion medium adjusted to a pH of 8 to 11 is used for the polymerization.

In the method for producing the thermally expandable microcapsule, next, the step of dispersing, in the aqueous dispersion medium, an oily mixture containing the monomer composition and the volatile expansion agent is performed.

Specifically, the step of dispersing, in the aqueous dispersion medium, an oily mixture containing the monomer composition and the volatile expansion agent is performed. In this step, the monomer composition and the volatile expansion agent may be separately added to the aqueous dispersion medium to prepare the oily mixture in the aqueous dispersion medium. Typically, however, they are mixed in advance to form the oily mixture, and the obtained oily mixture is added to the aqueous dispersion medium. In this case, the oily mixture and the aqueous dispersion medium may be prepared in separate containers in advance, mixed in another container with stirring to disperse the oily mixture in the aqueous dispersion medium, and then added to the polymerization reaction vessel. In this step, the inorganic compound is present at the interface between the oil droplets made of the oily mixture and the aqueous dispersion medium. As a result, the inorganic compound can be present on the surface of the resulting thermally expandable microcapsule.

The monomers are polymerized using a polymerization initiator. The polymerization initiator may be added to the oily mixture in advance, or may be added after the aqueous dispersion medium and the oily mixture are mixed with stirring in the polymerization reaction vessel.

The step may be performed with the specific-gravity modifier and optionally the dispersant added to the monomer composition instead of the aqueous dispersion medium. In this case, the specific-gravity modifier used can be present in the thermally expandable microcapsule.

The oily mixture may be emulsified at a predetermined particle size in the aqueous dispersion medium by, for example, a method including stirring with a homogenizing mixer (e.g., available from Tokushu Kika Kogyo Co., Ltd.) or the like, or a method including passing the oily mixture and the aqueous dispersion medium through a static dispersion apparatus such as a line mixer or an element-type static disperser.

Here, the aqueous dispersion medium and the monomer composition may be separately fed to the static dispersion apparatus. Alternatively, the aqueous dispersion medium and the monomer composition may be mixed and stirred in advance and the obtained dispersion may be fed to the dispersion apparatus.

The thermally expandable microcapsule that is an embodiment of the present invention can be produced by performing the step of polymerizing the monomers by heating the dispersion obtained through the above-described steps and performing a washing step. The thermally expandable microcapsule produced by such a method has a high maximum foaming temperature and excellent heat resistance and neither breaks nor contracts even during molding in a high-temperature range.

The present invention also encompasses a foamable masterbatch containing the thermally expandable microcapsule of the present invention and a resin (base resin). An ink containing the thermally expandable microcapsule and a resin can be used as a foamable ink. A composition containing the thermally expandable microcapsule of the present invention and a resin is suitably used in applications such as adhesives, rubber chips, foam chips, flooring materials, grouts, paints, coating materials, reinforcing fibers, composite materials, electronic components, and molding materials. The molding materials are suitably used in, for example, injection molding, extrusion molding, blow molding, rotation molding, vacuum forming, inflation molding, calendering, slush molding, dip molding, foam molding, and forming by a technique such as fused deposition modeling, ink-jet printing, stereolithography, or laser sintering.

The base resin may contain any resin such as a thermoplastic resin or curable resin used in typical foam molding. Specific examples of the thermoplastic resin include polyolefins such as low-density polyethylene (LDPE) and polypropylene (PP), polyvinyl acetate, ethylene-vinyl acetate copolymers (EVA), vinyl chloride, polystyrene, thermoplastic elastomers, and ethylene-methyl methacrylate copolymers (EMMA).

Preferred among these are LDPE, EVA, and EMMA because they have low melting points and can be easily processed. Each of these may be used alone, or two or more of them may be used in combination.

Examples of the curable resin include epoxy resin, (meth)acrylic resin, urethane resin, phenol resin, cyanate resin, isocyanate resin, maleimide resin, benzoxazine resin, silicone resin, fluororesin, polyimide resin, and phenoxy resin. The curable resin particularly preferably contains epoxy resin. Each of these curable resins may be used alone, or two or more of them may be used in combination.

The foamable masterbatch may contain any amount of the thermally expandable microcapsule. The lower limit of the amount relative to 100 parts by weight of the thermoplastic resin is preferably 10 parts by weight and the upper limit thereof is preferably 90 parts by weight.

The method for producing the foamable masterbatch is not limited. For example, the following method may be used. Raw materials such as the base resin and additives are kneaded in advance in a co-rotating twin screw extruder or the like. Subsequently, they are heated to a predetermined temperature, and a foaming agent such as the thermally expandable microcapsule is added, followed by further kneading. The resulting kneaded product is cut to a desired size using a pelletizer to form pellets, thereby producing a masterbatch. Alternatively, raw materials such as the base resin and the thermally expandable microcapsule may be kneaded in a batch-type kneader and then granulated in a granulator, thereby producing a pelletized masterbatch.

The kneader may be any kneader capable of kneading the raw materials without breaking thermally expandable microcapsules. Examples thereof include a pressure kneader and a Banbury mixer.

The present invention also encompasses a foam molded article obtained using the thermally expandable microcapsule or the foamable masterbatch. In particular, since the thermally expandable microcapsule is suitably usable even in applications that require post-processing at high temperature, a foam sheet with high appearance quality, such as a foam sheet with an irregular shape, can be obtained using the thermally expandable microcapsule or the foamable masterbatch. The foam sheet can be suitably used in applications such as wallpaper for housing.

Specifically, the foam molded article can be obtained by kneading the thermally expandable microcapsule or the foamable masterbatch containing the thermally expandable microcapsule with a matrix resin, followed by molding.

The present invention can improve the gas barrier properties and thereby enhance the durability in thermal expansion, while also improving the expansion ratio and the heat resistance.

The molding method for the foam molded article is not limited. Examples thereof include knead molding, calendering, extrusion molding, and injection molding. The injection molding may be performed by any method. Examples of the method include a short shot method, in which part of a resin material is placed in a mold and foamed, and a core back method, in which a mold is fully filled with a resin material and then opened enough to achieve a desired foam size.

### - Advantageous Effects of Invention

The present invention can provide a thermally expandable microcapsule that has excellent handleability and enables the production of a foam molded article with good color development, a foamable masterbatch containing the thermally expandable microcapsule, and a foam molded article produced using the thermally expandable microcapsule.

In particular, when the thermally expandable microcapsule of the present invention is added to a foamable ink or the like, localization of the thermally expandable microcapsules in the foamable ink can be prevented, enabling uniform distribution of the thermally expandable microcapsules.

### DESCRIPTION OF EMBODIMENTS

Embodiments of the present invention are more specifically described in the following with reference to, but not limited to, examples. The average primary particle sizes and densities of inorganic compounds below and the average primary particle sizes, specific surface areas, and densities of specific-gravity modifiers below were measured by the methods described above. The densities were measured using a true density meter (Pycnometer Ultrapyc 5000 micro, available from Anton Parr).

### (Example 1)

### (Preparation of thermally expandable microcapsule)

Thirty parts by weight of colloidal silica (available from Asahi Denka Co., Ltd., average primary particle size: 20 nm, density: 2.2 g/cm³) as an inorganic compound (dispersant) and 0.8 parts by weight of polyvinylpyrrolidone (available from BASF) were added to 250 parts by weight of ion-exchanged water and mixed to give an aqueous dispersion medium.

Separately, 20% by weight of acrylonitrile, 30% by weight of methacrylonitrile, 20% by weight of methacrylic acid, and 30% by weight of methyl methacrylate were mixed to give a monomer composition in the form of a uniform solution. To 100 parts by weight of this monomer composition were added, as additives, 0.8 parts by weight of an amine dispersant (Solsperse 39000, available from Lubrizol Corporation) and 4.1 parts by weight of zirconium nitride (UB-2, available from Mitsubishi Materials Corporation, average primary particle size: 35 nm, specific surface area: 35 m²/g, density: 6.4 g/cm³) as a specific-gravity modifier, and they were dispersed. The dispersion was then introduced into an autoclave. Further, 0.8 parts by weight of a polymerization initiator (2,2'-azobisisobutyronitrile), 0.6 parts by weight of 2,2'-azobis(2,4-dimethylvaleronitrile), 15 parts by weight of isopentane, and 10 parts by weight of isooctane were added into the autoclave and mixed.

Thereafter, the mixture was added to and suspended in the aqueous dispersion medium to give a dispersion.

The obtained dispersion was stirred and mixed using a homogenizer and introduced into a pressure polymerization vessel purged with nitrogen. The dispersion was reacted under pressure (0.5 MPa) at 60°C for 20 hours, whereby a reaction product was obtained. The obtained reaction product was repeatedly filtered and water-washed and then dried, whereby thermally expandable microcapsules were obtained.

The obtained thermally expandable microcapsules were added to an embedding resin (Technovit 4000, available from Kulzer) to a particle content of 3% by weight and dispersed to give a thermally expandable microcapsule-embedded resin. A thin film was prepared using a microtome (EM UC7, available from LEICA) such that is passed through or near the centers of the thermally expandable microcapsules dispersed in the embedding resin, and the thin film was observed under a transmission electron microscope (JEM-2100, available from JEOL Ltd.) to determine the position of the specific-gravity modifier. The observation showed that the specific-gravity modifier was present in the shells.

### (Preparation of foamable ink)

A stirring device was charged with 20.0% by weight of a polyvinyl acetate resin (degree of polymerization 700) as a binder resin, 8.0% by weight of the obtained thermally expandable microcapsules, 6.0% by weight of carbon black (C.I. Pigment Black 7, available from Mitsubishi Chemical Corporation) as a colorant, 60.0% by weight of ethanol as a solvent, and 6.0% by weight of glycerol as a wetting agent. They were stirred at room temperature for one hour to give a black foamable ink.

### (Example 2)

Thermally expandable microcapsules and a foamable ink were prepared as in Example 1 except that 0.03 parts by weight of an amine dispersant (Solsperse 39000, available from Lubrizol Corporation) and 0.1 parts by weight of zirconium nitride (UB-2, available from Mitsubishi Materials Corporation, average primary particle size: 35 nm, specific surface area: 35 m²/g, density: 6.4 g/cm³) as a specific-gravity modifier were added.

### (Example 3)

Thermally expandable microcapsules and a foamable ink were prepared as in Example 1 except that 0.3 parts by weight of an amine dispersant (Solsperse 39000, available from Lubrizol Corporation) and 1.4 parts by weight of zirconium nitride (UB-2, available from Mitsubishi Materials Corporation, average primary particle size: 35 nm, specific surface area: 35 m²/g, density: 6.4 g/cm³) as a specific-gravity modifier were added.

### (Example 4)

Thermally expandable microcapsules and a foamable ink were prepared as in Example 1 except that 1.4 parts by weight of an amine dispersant (Solsperse 39000, available from Lubrizol Corporation) and 6.8 parts by weight of zirconium nitride (UB-2, available from Mitsubishi Materials Corporation, average primary particle size: 35 nm, specific surface area: 35 m²/g, density: 6.4 g/cm³) as a specific-gravity modifier were added.

### (Example 5)

Thermally expandable microcapsules and a foamable ink were prepared as in Example 1 except that 2.7 parts by weight of an amine dispersant (Solsperse 39000, available from Lubrizol Corporation) and 13.7 parts by weight of zirconium nitride (UB-2, available from Mitsubishi Materials Corporation, average primary particle size: 35 nm, specific surface area: 35 m²/g, density: 6.4 g/cm³) as a specific-gravity modifier were added.

### (Example 6)

Thermally expandable microcapsules and a foamable ink were prepared as in Example 1 except that 8.2 parts by weight of an amine dispersant (Solsperse 39000, available from Lubrizol Corporation) and 41 parts by weight of zirconium nitride (UB-2, available from Mitsubishi Materials Corporation, average primary particle size: 35 nm, specific surface area: 35 m²/g, density: 6.4 g/cm³) as a specific-gravity modifier were added.

### (Example 7)

Thermally expandable microcapsules and a foamable ink were prepared as in Example 1 except that titanium black (12S, available from Mitsubishi Materials Corporation, average primary particle size: 62 nm, specific surface area: 22.5 m²/g, density: 4.3 g/cm³) was used as a specific-gravity modifier instead of zirconium nitride (UB-2, available from Mitsubishi Materials Corporation, average primary particle size: 35 nm, specific surface area: 35 m²/g, density: 6.4 g/cm³).

### (Example 8)

Thermally expandable microcapsules and a foamable ink were prepared as in Example 1 except that iron-manganese-copper oxide (Cu[Fe,Mn]O₄) (TM Black 3550, available from Dainichiseika Color & Chemicals Mfg. Co., Ltd., average primary particle size: 60 nm, specific surface area: 45 m²/g, density: 4.8 g/cm³) was used as a specific-gravity modifier instead of zirconium nitride (UB-2, available from Mitsubishi Materials Corporation, average primary particle size: 35 nm, specific surface area: 35 m²/g, density: 6.4 g/cm³).

### (Example 9)

Thermally expandable microcapsules and a foamable ink were prepared as in Example 1 except that ferrite (Fe₃O₄) (EMG1400, available from Ferrotec Corporation, average primary particle size: 10 nm, density: 5.0 g/cm³) was used as a specific-gravity modifier instead of zirconium nitride (UB-2, available from Mitsubishi Materials Corporation, average primary particle size: 35 nm, specific surface area: 35 m²/g, density: 6.4 g/cm³).

### (Examples 10 and 11)

Thermally expandable microcapsules and a foamable ink were prepared as in Example 1 except that the monomer composition and core agent shown in Table 1 were used.

### (Comparative Example 1)

Thermally expandable microcapsules and a foamable ink were prepared as in Example 1 except that no specific-gravity modifier was added.

### (Comparative Example 2)

Thermally expandable microcapsules and a foamable ink were prepared as in Example 1 except that silica (SiO₂, PM-09 available from Tokuyama Corporation, average primary particle size: 40 nm, density: 2.2 g/cm³) was used as a specific-gravity modifier instead of zirconium nitride (UB-2, available from Mitsubishi Materials Corporation, average primary particle size: 35 nm, specific surface area: 35 m²/g, density: 6.4 g/cm³).

### (Comparative Example 3)

Thermally expandable microcapsules and a foamable ink were prepared as in Example 1 except that carbon black (MA14, available from Mitsubishi Chemical Corporation, average primary particle size: 40 nm, density: 1.9 g/cm³) was used as a specific-gravity modifier instead of zirconium nitride (UB-2, available from Mitsubishi Materials Corporation, average primary particle size: 35 nm, specific surface area: 35 m²/g, density: 6.4 g/cm³).

### (Evaluation method)

The performances of the obtained thermally expandable microcapsules and foamable inks were evaluated using the following methods. Table 1 shows the results.

### (1) Evaluation of thermally expandable microcapsule

### (1-1) Measurement of volume average particle size

The volume average particle size of the obtained thermally expandable microcapsules was measured using a laser diffraction/scattering particle size distribution analyzer (LS 13 320, available from Beckman Coulter, Inc.).

### (1-2) Measurement of foaming starting temperature, maximum displacement, and maximum foaming temperature

The foaming starting temperature (Ts), maximum displacement (Dmax), and maximum foaming temperature (Tmax) were measured using a thermomechanical analyzer (TMA) (TMA2940, available from TA Instruments). Specifically, 25 µg of the sample was placed in an aluminum container (diameter 7 mm, depth 1 mm) and heated from 80°C to 250°C at a temperature increase rate of 5°C/min with a force of 0.1 N being applied from above. The displacement in a perpendicular direction of the measuring terminal was measured. The temperature at which the displacement began to increase was taken as the foaming starting temperature. The maximum value of the displacement was taken as the maximum displacement. The temperature at which the maximum displacement was obtained was taken as the maximum foaming temperature.

### (1-3) Measurement of lightness (L* value)

The thermally expandable microcapsules obtained in the examples and the comparative examples were analyzed using a spectrophotometer (CM-26dG, available from Konica Minolta, Inc.) to determine the lightness L* value in the CIE LAB (L*a*b*) colorimetric system in accordance with JIS Z 8722:2009.

### (1-4) True density

The true density of the thermally expandable microcapsules was measured using a true density meter (Ultrapyc 5000, available from Anton Parr) at a pressure of 12 psi and a temperature of 25°C with helium gas.

### (2) Evaluation of foamable ink

### (2-1) Surface state of ink (after 24 hours)

The obtained foamable ink was sufficiently mixed and charged into a 20-mL syringe. The surface of the ink after 24 hours was observed to determine whether floating of thermally expandable microcapsules (particles) had occurred. The evaluation criteria are as follows. "∘∘" indicates that no floating had occurred; "o" indicates that no floating had occurred but the proportion of thermally expandable microcapsules present in the upper half of the syringe was slightly higher; "△" indicates that no floating had occurred but slight sedimentation was observed; and "×" indicates that floating had occurred.

### (2-2) Color shade of ink (after foaming)

The foamable ink was applied to an aluminum plate, dried, and then heated in a heating oven at 210°C for five minutes.

The color shades of the ink before and after heating were compared to assess the degree of fading. The criteria are as follows: "∘∘" indicates that no fading had occurred (fading suppressed); "o" indicates that no fading had occurred but a slight change in shade had occurred; "△" indicates that no fading had occurred but a change in shade had occurred; and "×" indicates that fading had occurred.

**[Table 1]**

| | | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|---|---|---|
| Thermally expandable microcapsule | Specific-gravity modifier | Type | | Zirconium nitride | Zirconium nitride | Zirconium nitride | Zirconium nitride | Zirconium nitride | Zirconium nitride | Titanium black | Cu[Fe,Mn]O 4 | Ferrite (Fe₃O₄) | Zirconium nitride | Zirconium nitride | - | SiO₂ | Carbon black |
| | | Average primary particle size (nm) | | 35 | 35 | 35 | 35 | 35 | 35 | 62 | 60 | 10 | 35 | 35 | - | 40 | 40 |
| | | Density (g/cm³) | | 6.4 | 6.4 | 6.4 | 6.4 | 6.4 | 6.4 | 4.3 | 4.8 | 5.0 | 6.4 | 6.4 | - | 2.2 | 1.9 |
| | | Amount relative to entirety of particle (% by weight) | | 3 | 0.1 | 1 | 5 | 10 | 30 | 3 | 3 | 3 | 3 | 3 | - | 3 | 3 |
| | | Position | | In shell | In shell | In shell | In shell | In shell | In shell | In shell | In shell | In shell | In shell | In shell | - | In shell | In shell |
| | Dispersant | Type | | Si | Si | Si | Si | Si | Si | Si | Si | Si | Si | Si | Si | Si | Si |
| | | Amount relative to entirety of particle (% by weight) | | 4.3 | 4.3 | 4.3 | 4.3 | 4.3 | 4.3 | 4.3 | 4.3 | 4.3 | 4.3 | 4.3 | 4.5 | 4.5 | 4.5 |
| | Monomer composition (organic resin component) | Nitrile monomer | Acrylonitrile | 20 | 20 | 20 | 20 | 20 | 20 | 20 | 20 | 20 | 1.7 | 33 | 20 | 20 | 20 |
| | | | Methacrylonitrile | 30 | 30 | 30 | 30 | 30 | 30 | 30 | 30 | 30 | 54.2 | 25 | 30 | 30 | 30 |
| | | Carboxy group-containing monomer | Methacrylic acid | 20 | 20 | 20 | 20 | 20 | 20 | 20 | 20 | 20 | 40.7 | 30 | 20 | 20 | 20 |
| | | Different monomer | Methyl methacrylate | 30 | 30 | 30 | 30 | 30 | 30 | 30 | 30 | 30 | 0 | 12 | 30 | 30 | 30 |
| | | | Methyl acrylate | 0 | 0 | 0 | 0 | 0 | 0 | 0 | 0 | 0 | 3.4 | 0 | 0 | 0 | 0 |
| | Core agent | Volatile expansion agent | Isopentane | 15 | 15 | 15 | 15 | 15 | 15 | 15 | 15 | 15 | 125 | 10 | 15 | 15 | 15 |
| | | | Isooctane | 10 | 10 | 10 | 10 | 10 | 10 | 10 | 10 | 10 | 125 | 15 | 10 | 10 | 10 |
| | Evaluation | Volume average particle size [before foaming] (µm) | | 25.1 | 25.2 | 24.7 | 25.0 | 24.8 | 25.4 | 24.8 | 24.5 | 25.2 | 24.6 | 24.4 | 25.3 | 25.1 | 24.9 |
| | | Foaming starting temperature [Ts] (°C) | | 164 | 167 | 165 | 164 | 162 | 160 | 162 | 163 | 14 | 162 | 165 | 162 | 161 | 162 |
| | | Maximum foaming temperature [Tmax] (°C) | | 203 | 210 | 205 | 199 | 197 | 194 | 201 | 199 | 200 | 196 | 198 | 205 | 200 | 203 |
| | | Maximum displacement [Dmax] (µm) | | 603 | 803 | 700 | 567 | 545 | 501 | 584 | 589 | 592 | 523 | 510 | 538 | 512 | 499 |
| | | Lightness (L* value) | | 35 | 58 | 45 | 30 | 27 | 24 | 36 | 35 | 38 | 34 | 34 | 60 | 60 | 34 |
| | | True density (g/cm³) | | 1.13 | 1.08 | 1.10 | 1.15 | 1.21 | 1.35 | 1.12 | 1.12 | 1.13 | 1.13 | 1.13 | 1.07 | 1.09 | 1.09 |
| Foamable ink | Evaluation | Surface state of ink after 24 hours | | ○○ | Δ | ○ | 00 | ○ | Δ | 00 | 00 | 00 | 00 | 00 | × | × | × |
| | | Color shade of ink before and after foaming | | ○○ | Δ | ○ | 00 | 00 | 00 | 00 | 00 | ○ | 00 | 00 | × | × | ○○ |

### INDUSTRIAL APPLICABILITY

The present invention can provide a thermally expandable microcapsule thet has excellent handleability and enables the production of a foam molded article with good color development, a foamable masterbatch containing the thermally expandable microcapsule, and a foam molded article produced using the thermally expandable microcapsule.

## Claims

1. A thermally expandable microcapsule comprising:
a shell containing a polymer compound; and
a volatile expansion agent as a core agent encapsulated by the shell,
the shell containing a specific-gravity modifier having a density of 2.3 g/cm³ or greater and 22 g/cm³ or less.

2. The thermally expandable microcapsule according to claim 1,
wherein the specific-gravity modifier is zirconium nitride.

3. The thermally expandable microcapsule according to claim 1 or 2,
wherein the specific-gravity modifier is contained in an amount of 0.01% by weight or more and 30% by weight or less relative to an entirety of the thermally expandable microcapsule.

4. The thermally expandable microcapsule according to any one of claims 1 to 3,
wherein the specific-gravity modifier is present in the shell or on a surface of the shell.

5. The thermally expandable microcapsule according to any one of claims 1 to 3,
wherein the specific-gravity modifier is present in the shell and on a surface of the shell.

6. The thermally expandable microcapsule according to any one of claims 1 to 5, which has a true density of 1.08 g/cm³ or greater and 1.50 g/cm³ or less.

7. The thermally expandable microcapsule according to any one of claims 1 to 6, which has a lightness (L* value) of 50 or less.

8. A foamable masterbatch comprising:
the thermally expandable microcapsule according to any one of claims 1 to 7; and
a resin.

9. A foam molded article produced using the thermally expandable microcapsule according to any one of claims 1 to 7.
